# EUROPÄISCHE PATENTANMELDUNG

(11) **EP 3 488 971 A1**
(43) Veröffentlichungstag der Anmeldung: **29.05.2019**
(21) Anmeldenummer: 17202961.3
(22) Anmeldetag: 22.11.2017
(51) Int. Cl.: B25B 5/16, F16H 1/16, B25B 5/06

(54) **ELEKTRISCH ANTREIBBARE SCHWENKVORRICHTUNG**

(71) Anmelder: UNIVER S.p.A., 20128 Milano (IT)
(72) Erfinder: Migliori, Luciano, 20124 Milano (IT)
(74) Vertreter: Quermann, Helmut

(57) **Zusammenfassung**

Die Erfindung betrifft eine Schwenkvorrichtung (1) mit einem Kopfteil (2) und einem Antriebsteil (3), wobei das Antriebsteil (3) einen Elektromotor (56) aufweist und das Kopfteil (2) ein mittels des Elektromotors (56) antreibbares Schneckengetriebe (7) aufweist, wobei das Schneckengetriebe (7) eine antriebsseitige Welle (19) mit mindestens einem Schraubengang (20) und ein darin kämmendes, schrägverzahntes Rad (21) aufweist, wobei mittels des Rades (21) eine aus dem Kopfteil (2) herausgeführte Ausgangswelle (38) antreibbar ist und die Ausgangswelle (38) drehfest mit mindestens einem Schwenkelement (41) verbunden ist, wobei die Welle (19) beidseitig deren mindestens einen Schraubengang (20) mittels Wälzlagern (22, 23) in einem Gehäuse (4) des Kopfteils (2) gelagert ist.

Bei einer solchen Schwenkvorrichtung ist erfindungsgemäß vorgesehen, dass die Welle (19), bezogen auf deren Drehachse (36), in einer Ebene (X, Z), die senkrecht zur Drehachse (37) des Rades (21) angeordnet ist, verstellbar ist, mit einer Verstellkomponente der Welle (19) senkrecht zu deren Drehachse (36).

Eine solche Schwenkvorrichtung gewährleistet eine Spielfreiheit, insbesondere im Bereich des Schneckengetriebes.

## Beschreibung

Die Erfindung betrifft eine Schwenkvorrichtung mit einem Kopfteil und einem Antriebsteil, wobei das Antriebsteil einen Elektromotor aufweist und das Kopfteil ein mittels des Elektromotors antreibbares Schneckengetriebe aufweist, wobei das Schneckengetriebe eine antriebsseitige Welle mit mindestens einem Schraubengang und ein darin kämmendes, schrägverzahntes Rad aufweist, wobei mittels des Rades eine aus dem Kopfteil herausgeführte Ausgangswelle antreibbar ist und die Ausgangswelle drehfest mit mindestens einem Schwenkelement verbunden ist, wobei die Welle beidseitig deren mindestens einen Schraubengang mittels Wälzlagern in einem Gehäuse des Kopfteils gelagert ist.

Schwenkvorrichtungen finden in vielfältigen Konstruktionen Einsatz im Karosseriebau der Kfz-Industrie. Hierbei kann mit dem mindestens einen Schwenkelement der Schwenkvorrichtung ein spezifisches Werkzeug verbunden sein, um insbesondere die Funktion einer Spannvorrichtung, einer Schweißzange, eines Prägewerkzeugs, eines Clinchwerkzeugs oder eines Stiftziehzylinders zu verwirklichen. Je nach Anforderung kann in die Schwenkvorrichtung eine Kniehebelfunktion integriert sein, um in einer Übertotpunktstellung des Kniehebels eine sichere Endpositionierung des Werkzeugs zu gewährleisten.

Eine Schwenkvorrichtung der eingangs genannten Art, die somit einen elektromotorischen Antrieb aufweist, ist aus der WO 03/047815 A1 bekannt. Bei dieser ist über einen Elektromotor ein Schneckengetriebe antreibbar. Das Schneckenrad des Schneckengetriebes wirkt mit einem Kniehebel zusammen, der seinerseits mit der aus dem Kopfteil herausgeführten Ausgangswelle zusammenwirkt, die drehfest mit dem Schwenkelement verbunden ist. Durch Drehrichtungsumkehr des Elektromotors lässt sich das Schneckenrad und damit das Schwenkelement hin und her verschwenken. Der Elektromotor ist als Wechselstrom- oder Drehstrommotor ausgebildet. Zum Lagern der Welle des Schneckengetriebes sind zwei Wälzlager vorgesehen, die die Welle beidseitig des mindestens einen Schraubengangs der Welle lagern. Bei diesen Wälzlagern handelt es sich um Nadellager, Kugellager oder dergleichen.

Schwenkvorrichtungen der eingangs genannten Art unterliegen einem Verschleiß auch im Bereich des Schneckengetriebes. So ist mit fortschreitender Betriebsdauer der Schwenkvorrichtung ein erhöhtes Spiel im Schneckengetriebe zu verzeichnen, mit der Konsequenz, dass die Positioniergenauigkeit, somit Winkelgenauigkeit, des mindestens einen Schwenkelements beim Betreiben mittels des Elektromotors sich verringert und überdies sich das Geräuschverhalten der Schwenkvorrichtung wegen des erhöhten Spiels nachteilig entwickelt. Eine verminderte Winkelgenauigkeit des Schwenkelements bedingt eine ungenaue Positionierung des Werkzeugs, insbesondere in einer Endstellung des Schwenkelements.

Aufgabe der vorliegenden Erfindung ist es, eine Schwenkvorrichtung der eingangs genannten Art so weiterzubilden, dass eine Spielfreiheit der Schwenkvorrichtung, insbesondere im Bereich des Schneckengetriebes, gewährleistet ist.

Gelöst wird die Aufgabe durch eine Schwenkvorrichtung, die die Merkmale des Patentanspruchs 1 aufweist.

Bei der erfindungsgemäßen Schwenkvorrichtung ist die Welle, bezogen auf deren Drehachse, in einer Ebene, die senkrecht zur Drehachse des Rades angeordnet ist, verstellbar, mit einer Verstellkomponente der Welle senkrecht zu deren Drehachse.

Bei der erfindungsgemäßen Schwenkvorrichtung besteht somit die Möglichkeit, die Welle des Schneckengetriebes in unterschiedlichen Positionen bezüglich des Rades des Schneckengetriebes auszurichten und durch Herbeiführung einer anderen ausgerichteten Position ein Spiel zwischen dem mindestens einen Schraubengang der Welle und dem darin kämmenden, schrägverzahnten Rad zu eliminieren. Es lässt sich somit ein Spiel im Schneckengetriebe eliminieren, demzufolge ein Spiel zwischen dem mindestens einen Schraubengang, auch Schnecke genannt, und dem darin kämmenden, schrägverzahnten Rad, auch Schneckenrad genannt, eliminieren. Durch diese Verstellmöglichkeit der Welle relativ zum Rad kann ein optimaler Eingriff der Zähne von Schraubengang und Rad gewährleistet werden, bei einfach herbeizuführendem optimalen Abstand von Drehachse der Welle und Drehachse des Rades.

Betreffend die grundsätzliche Ausgestaltung der Schwenkvorrichtung ist insbesondere vorgesehen, dass der Elektromotor als Gleichstrommotor oder als Wechselstrommotor ausgebildet ist. Diese Elektromotoren sind vorzugsweise als handelsübliche Motoren ausgebildet.

Vorzugsweise ist die Schwenkvorrichtung derart gestaltet, dass die Welle des Schneckengetriebes mittels des Elektromotors in einer Drehrichtung und in einer zu dieser Drehrichtung entgegengesetzten Drehrichtung antreibbar ist. Die Schwenkvorrichtung dient somit dem Schwenken des mindestens einen Schwenkelements in einer Richtung hin und in der entgegengesetzten Richtung zurück.

Die Schwenkvorrichtung kann durchaus auch ein Zwischengetriebe aufweisen. Insofern wird es als bevorzugt angesehen, wenn eine Antriebswelle des Elektromotors über das Zwischengetriebe, insbesondere ein Stirnradgetriebe, mit der Welle des Schneckengetriebes verbunden ist. Hierdurch lässt sich eine besonders große Untersetzung der Drehzahl des Elektromotors zur Erreichung einer winkelpräzisen Verschwenkung des Schwenkelements erzielen.

Insbesondere ist das Rad drehfest mit der Ausgangswelle verbunden. Das Schneckengetriebe wirkt somit unmittelbar mit der Ausgangswelle zusammen, die ihrerseits drehfest mit dem mindestens einen Schwenkelement verbunden ist. Bei dieser grundsätzlichen Gestaltung ist somit zwischen dem Rad des Schneckengetriebes und der Ausgangswelle kein Kniehebel angeordnet. Bei Spielfreiheit der Komponenten innerhalb der Schwenkvorrichtung führt somit eine Drehbewegung eines Rotors des Elektromotors zu einer exakten proportionalen Schwenkbewegung des mindestens einen Schwenkelements.

Der Elektromotor ist vorzugsweise als Schrittmotor ausgebildet. Hierdurch lassen sich gewünschte Winkelpositionen des Schwenkelements definiert und zudem in kleinen Winkelschritten anfahren. Die Ausführung mit Schrittmotor weist insbesondere einen selbstangetriebenen Mehrbereichsencoder auf. Deshalb ist keine Versorgung und keine Pufferbatterie erforderlich. Der Elektromotor kann vorzugsweise alternativ als Brushless-Motor ausgebildet sein.

Die Schwenkvorrichtung ist vorzugsweise mit einem oder zwei Schwenkelementen versehen. Das Schwenkelement bzw. die beiden Schwenkelemente sind fest, insbesondere lösbar mit der Ausgangswelle verbunden und dienen der Aufnahme des für den konkreten Anwendungszweck geeigneten Werkzeugs bzw. geeigneter Werkzeuge. Diese werden in aller Regel auf geeignete Art und Weise lösbar mit dem zugeordneten Schwenkelement verbunden. Bei diesen Werkzeugen handelt es sich vorzugsweise um solche, die im Karosseriebau der Kfz-Industrie Verwendung finden, wie eine Spannvorrichtung, eine Schweißzange, ein Prägewerkzeug, ein Clinchwerkzeug oder ein Stiftziehzylinder.

Gemäß einer bevorzugten Ausführungsform der Erfindung ist vorgesehen, dass die Welle des Schneckengetriebes mittels einer Stellvorrichtung verstellbar ist. Insbesondere ist vorgesehen, dass die Welle mittels der Stellvorrichtung stufenlos verstellbar ist. Mittels der Stellvorrichtung lässt sich die Welle, auf einfache Art und Weise, in der gewünschten Position bezüglich des Rades positionieren, somit die Schnecke präzise zum Schneckenrad positionieren.

Es wird als baulich besonders vorteilhaft und funktionell besonders einfach angesehen, wenn mittels der Stellvorrichtung eine Lageraufnahme eines der Wälzlager verstellbar ist, insbesondere die Lageaufnahme geführt im Gehäuse verstellbar ist. Dieses Wälzlager wird somit nicht unmittelbar vom Gehäuse aufgenommen, sondern von einer Lageraufnahme. Diese Lageraufnahme wird vom Gehäuse aufgenommen, wobei die Lageraufnahme geführt im Gehäuse verstellbar ist. Mittels der Stellvorrichtung lässt sich dieses Wälzlager einfach in Richtung des Schneckenrades bzw. von diesem weg bewegen und damit das Spiel zwischen Schnecke und Schneckenrad einstellen.

Gemäß einer konstruktiv besonders einfachen und besonders funktionellen Gestaltung ist vorgesehen, dass die Stellvorrichtung mindestens eine in das Gehäuse eingeschraubte Stellschraube aufweist, wobei mittels der Stellschraube die Lageraufnahme verstellbar ist. Die Stellschraube lässt sich aufgrund dessen Gewinde sehr präzise mehr oder weniger in das Gehäuse einschrauben und kann somit sehr präzise die Verstellung der Welle gewährleisten. Von besonders großem Vorteil ist es, wenn die mindestens eine Stellschraube selbsthemmend vom Gehäuse aufgenommen wird. Hierdurch ist sichergestellt, dass die Stellschraube deren eingestellte Position beibehält.

Es ist insbesondere vorgesehen, dass mittels der Stellvorrichtung die Lageraufnahme desjenigen Wälzlagers, das die Welle dem Elektromotor oder dem Zwischengetriebe abgewandt lagert, verstellbar ist. Erfolgt die Verstellung der Welle nur mittels dieser Stellvorrichtung, vorliegend in dem einen Bereich der Welle, führt dies dazu, dass die Welle beim Verstellen um das Wälzlager, das dem Elektromotor oder dem Zwischengetriebe zugewandt ist, geringfügig geschwenkt wird. Diese Schwenkbewegung bewirkt eine Positionsveränderung von Schnecke und Schneckenrad, somit eine Veränderung des Spiels zwischen diesen.

Baulich besonders einfach ist die Lagerung der Welle, wenn mindestens das der Stellvorrichtung zugeordnete Wälzlager als Kegelrollenlager ausgebildet ist. Insbesondere ist vorgesehen, dass alle Wälzlager, somit die beiden grundsätzlich zur Lagerung der Welle vorgesehenen Wälzlager, als Kegelrollenlager ausgebildet sind. Die Kegelrollenlager haben den Vorteil, dass sie Axial- und Radialkräfte aufnehmen können und überdies beim jeweiligen Kegelrollenlager dessen Innenring und dessen Außenring, die zwischen sich die Kegelrollen aufnehmen, lose zueinander positioniert sind. Diese Wälzlagerung ist für die Verschwenkung der Drehachse der Welle besonders gut geeignet.

Gemäß einer besonderen Weiterentwicklung der Erfindung ist vorgesehen, dass mindestens eines der Wälzlager, insbesondere alle bzw. beide Wälzlager, sich über mindestens eine Tellerfeder, vorzugsweise mehrere Tellerfedern, axial abstützt bzw. abstützen. Diese Tellerfeder bzw. diese Tellerfedern sind unter mehreren Aspekten von Vorteil. So wirkt über die jeweilige Tellerfeder eine Axialkraft auf das Wälzlager ein, je nach Anordnung der Tellerfeder auf den Innenring oder den Außenring des Wälzlagers, wobei vorzugsweise eine solche Ausgestaltung vorgesehen ist, dass die jeweilige Tellerfeder auf den Innenring des Wälzlagers wirkt. Die Tellerfeder ist hervorragend geeignet, nicht nur eine Vorspannung auf die Welle des Schneckengetriebes auszuüben, sondern auch Kräfte aus der Verschiebung der Welle, insbesondere der geringfügigen Verschwenkung der Drehachse der Welle aufzunehmen. Abgesehen hiervon dient die jeweilige Tellerfeder auch als Dämpfer während möglichen Schlägen oder plötzlichen Bremsungen, die über das Werkzeug auf das mindestens eine Schwenkelement der Schwenkvorrichtung einwirken.

Bei Ausbildung der elastischen Elemente als Tellerfedern wird es als besonders vorteilhaft angesehen, wenn sich das jeweilige Wälzlager über zwei gegensinnig angeordnete Tellerfedern abstützt. Hierdurch ist über eine noch größere axiale Länge ein Einfedern der Welle und damit dessen Verlagerung, insbesondere zwecks Dämpfung bzw. Schwenkung zum Spielausgleich möglich. Die elastische Verformung der Tellerfedern stellt sicher, dass die Welle nach den möglichen Schlägen oder plötzlichen Bremsungen deren Ausgangsstellung wieder einnimmt.

Es wird als baulich besonders vorteilhaft vorgesehen, insbesondere unter dem Aspekt einer besonders einfachen Gestaltung, wenn ein der Aufnahme der Welle dienender Innenring mindestens eines der Wälzlager sich über die mindestens eine Tellerfeder, vorzugsweise die mehreren Tellerfedern axial abstützt. Die Abstützung der Welle erfolgt somit jeweils über den Innenring bzw. die Innenringe des Wälzlagers bzw. der Wälzlager.

Gemäß einer konkreten Weiterbildung ist vorgesehen, dass sich der Innenring über zwei gegensinnig angeordnete Tellerfedern abstützt, wobei die Tellerfedern sich in ihrem radial inneren Bereich nicht kontaktieren.

Das jeweilige Wälzlager stützt sich insbesondere einerseits zwischen der Welle und andererseits zwischen dem Gehäuse oder einem im Gehäuse verbundenen Teil, insbesondere Deckel ab.

Weitere Merkmale der Erfindung sind in den Unteransprüchen, der Beschreibung der Figuren sowie in den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels veranschaulicht, ohne auf die beschriebene Ausführungsform beschränkt zu sein.

Es zeigt:
- Fig. 1: eine räumliche Ansicht der Schwenkvorrichtung,
- Fig. 2: einen Schnitt durch die Schwenkvorrichtung gemäß Fig. 1 in einer X-Z-Ebene, geschnitten durch die Drehachse der Schneckenwelle, nur für den Bereich eines Kopfteils der Schwenkvorrichtung veranschaulicht,
- Fig. 3: die obere Wälzlagerung gemäß Fig. 2 in vergrößerter Darstellung,
- Fig. 4: die untere Wälzlagerung gemäß Fig. 2 in einer vergrößerten Darstellung,
- Fig. 5: eine räumliche Ansicht eines Teilbereichs des Kopfteils der Schwenkvorrichtung bei teilweise geschnittenen beiden Gehäuseteilen des Gehäuses der Schwenkvorrichtung,
- Fig. 6: einen Schnitt durch die Schwenkvorrichtung in einer X-Y-Ebene, durch das obere Wälzlager geschnitten,
- Fig. 7: eine Ansicht Y des in Fig. 5 gezeigten oberen rechten Bereichs der Schwenkvorrichtung,
- Fig. 8: eine vergrößerte Darstellung des in Fig. 6 umrandeten Bereichs,
- Fig. 9: einen Schnitt durch die Schwenkvorrichtung im Bereich des oberen Wälzlagers zur Verdeutlichung der in X-Richtung verschieblichen Lagerung des Wälzlagers im Gehäuse,
- Fig. 10: das Schneckengetriebe und dessen Lagerung mit Veranschaulichung der Schwenkbarkeit der Schnecke um den Winkel α bei Verlagerung deren oberen Wälzlagers in X-Richtung,
- Fig. 11: einen Schnitt entsprechend Fig. 2, allerdings für die gesamte Schwenkvorrichtung veranschaulicht.

### Figurenbeschreibung

Die in der Figurenbeschreibung für das Ausführungsbeispiel Bezug genommenen X-, Y-, Z-Richtungen stehen jeweils senkrecht zueinander. Grundsätzlich ist es aber nicht erforderlich, dass diese Richtungen senkrecht zueinander sind.

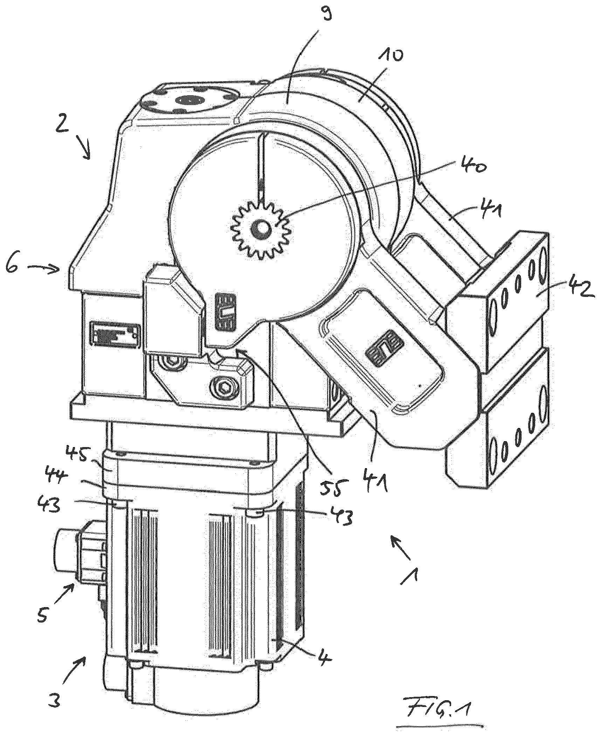

Die Fig. 1 und 2 sowie 11 verdeutlichen den grundsätzlichen Aufbau der Schwenkvorrichtung 1. Diese weist ein Kopfteil 2 und ein Antriebsteil 3 auf. Das Antriebsteil 3 weist ein Gehäuse 4 und einen von diesem aufgenommenen Elektromotor 56, der als Schrittmotor ausgebildet ist, auf. Mit der Bezugsziffer 5 ist eine Einheit des Antriebsteils 3 veranschaulicht, die elektrischen Anschlüsse, Anzeigen und Eingabetasten für die Schwenkvorrichtung aufweist. Aus dem Gehäuse 4 ist, bezogen auf die Orientierung der Fig. 1, nach oben, eine Rotorwelle 57 des Elektromotors 56 herausgeführt.

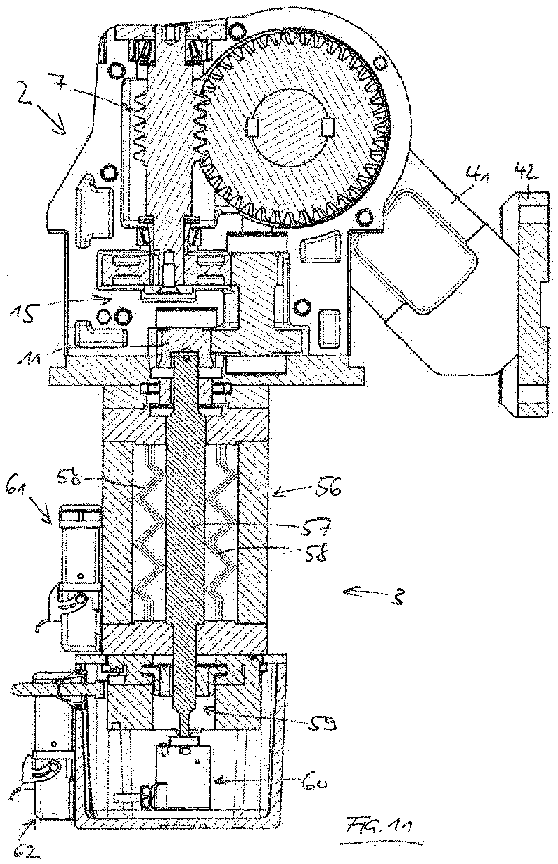

Im Zusammenhang mit dem Aufbau des Antriebsteils 3 sind in der Fig. 11 zusätzlich die elektrische Windung 58 des Elektromotors 56, eine in Wirkverbindung mit der Rotorwelle 57 bringbare Bremse 59, ein Encoder 60, Anschlüsse 61 für den Schrittmotor und Anschlüsse 62 für die Bremse 59 und den Encoder 60 veranschaulicht.

Das Kopfteil 2 weist ein Gehäuse 6 auf, in dem ein Schneckengetriebe 7 und ein Zwischengetriebe 8 gelagert sind. Hierbei besteht das Gehäuse 6 aus Gehäusehälften 9 und 10. Diese sind mittels einer Vielzahl sich in Y-Richtung erstreckender Schrauben miteinander verschraubt.

In Z-Richtung weist das Kopfteil 2 im Bereich seines unteren Endes eine Welle 11 auf, die der Drehmoment übertragenden Aufnahme der Rotorwelle 57 des Elektromotors 56 dient. Diese Welle 11 ist in zwei Wälzlagern 12 gelagert, die im Gehäuse 6 gelagert sind. Zwischen den beiden Wälzlagern 12 weist die Welle 11 einen Stirnradzahnabschnitt 13 auf. Dieser kämmt mit einem Stirnrad 14 einer Zwischenwelle 15, die in zwei Wälzlagern 16 gelagert ist, die im Gehäuse 6 gelagert sind. Ein zweites Stirnrad 17 der Zwischenwelle 15 kämmt mit einem Stirnrad 18, das drehfest mit einer antriebsseitigen Welle 19 des Schneckengetriebes 7 verbunden ist.

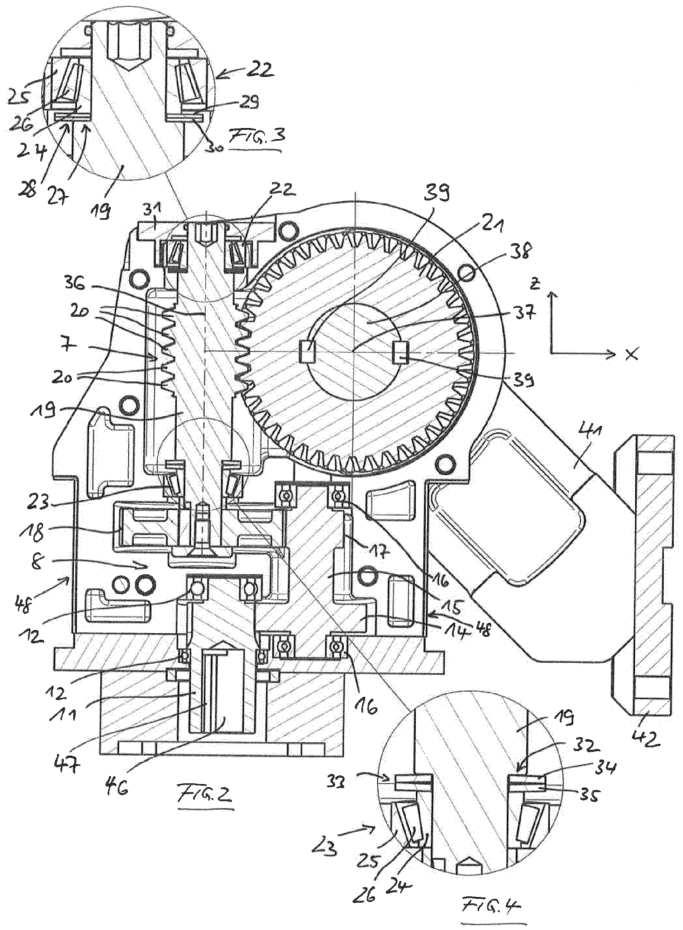

Das Schneckengetriebe 7 weist diese antriebsseitige Welle 19 mit mehreren Schraubengängen 20 und ein darin kämmendes, schrägverzahntes Rad 21 auf. Die der Welle 19 zugeordnete Schnecke kämmt somit mit dem Schneckenrad 21. Gelagert ist die Welle 19, bezogen auf die Orientierung der Fig. 2, an ihrem oberen Ende in einem Wälzlager 22 und oberhalb des Stirnrads 18, somit zwischen dem Stirnrad 18 und den Schraubengängen 20, in einem Wälzlager 23. Die beiden Wälzlager 22, 23 sind als Kegelrollenlager ausgebildet, mit einem Innenring 24, einem Außenring 25 und dazwischen angeordneten Kegelrollen 26. Benachbart dem Wälzlager 22 weist die Welle 19 einen Rücksprung 27 auf, dahingehend, dass sie sich zu dem diesem Wälzlager 22 zugewandten Ende verjüngt. Im Bereich des Rücksprungs ist ein Tellerfederpaket 28, das aus zwei Tellerfedern 29, 30 gebildet ist, angeordnet. Die beiden Tellerfedern 29 und 30 liegen radial außen an und sind radial innen geringfügig beabstandet. Die Tellerfeder 29 stützt sich am Innenring 24 und die Tellerfeder 30 am Rücksprung 27 der Welle 19 ab. Vorgespannt ist der Außenring 25 des Wälzlagers 22 über ein Gehäusebauteil. Bei diesem Gehäusebauteil handelt es sich konkret um einen Deckel 31, der zentriert in die beiden Gehäusehälften 9, 10 eingesetzt und mittels mehrerer Schrauben mit diesen verschraubt ist.

Die Lagerung der Welle 19 im Bereich des anderen Wälzlagers 23 erfolgt ähnlich der zuvor beschriebenen Lagerung: Die Welle 19 weist einen Rücksprung 32 auf, wobei sich die Welle 19 in Richtung des Wälzlagers 23 verjüngt. Im Bereich dieses Wälzlagers 23 ist ein weiteres Tellerfederpaket 33 angeordnet, das zwei Tellerfedern 34, 35 aufweist. Die beiden Tellerfedern 34, 35 liegen radial außen an und es stützt sich die Tellerfeder 34 radial innen an der Welle 19 im Bereich des Rücksprungs 32 und die Tellerfeder 35 am Innenring 24 des Wälzlagers 23 ab. Der Außenring 25 des Wälzlagers 23 stützt sich an Rücksprüngen der Gehäusehälften 9 und 10 ab. Damit ist die Welle 19 im Wesentlichen axial festgelegt, abgesehen von der Einfederungsmöglichkeit in Axialrichtung der Welle 19 aufgrund der beiden Tellerfederpakete 28 und 33.

Die Drehachse der Welle 19 ist mit der Bezugsziffer 36, die Drehachse des Rades 21 mit der Bezugsziffer 37 bezeichnet. In den beiden miteinander verschraubten Gehäusehälften 9 und 10 ist eine Ausgangswelle 38 drehbar gelagert, die über Passfedern 39 drehfest mit dem Rad 21 des Schneckengetriebes 7 verbunden ist. Die axiale Lagerung des Rades 21 im Gehäuse 6 ist nicht näher veranschaulicht. Die Ausgangswelle 38 ist beidseitig aus dem Gehäuse 6 herausgeführt, durchsetzt somit die Gehäusehälften 9 und 10. Die Ausgangswelle 38 ist in deren beiden aus dem Gehäuse 6 herausgetretenen Endbereichen als Keilwelle 40 ausgebildet, und es sind auf diese Keilwellenabschnitte zwei Schwenkelemente 41 aufgesteckt und axial gesichert positioniert. Die beiden Schwenkelemente 41 sind mit identischer Orientierung bezüglich der Drehachse 37 angeordnet. Im Bereich deren freien Enden ist eine Aufnahmeplatte 42 mit den beiden Schwenkelementen 41 fest verbunden. Die beiden Schwenkelemente 41 und die Aufnahmeplatte 42 bilden eine Schwenkelementeinheit, die der Lagerung und Befestigung eines mittels der Schwenkvorrichtung 1 zu schwenkenden Werkzeugs dient. Hierbei handelt es sich insbesondere um eine bei der Karosseriefertigung in der Kfz-Industrie Verwendung findende Spannvorrichtung, Schweißzange, Prägewerkzeug, Clinchwerkzeug oder Stiftziehzylinder.

Die Schwenkvorrichtung 1 ist durch das Kopfteil 2 und das Antriebsteil 3 gebildet. Das Antriebsteil 3 wird mittels diverser Schrauben 43 im Bereich eines Flansches 44 mit dem Kopfteil 2 verschraubt. Hierbei liegt ein Flansch 45 des Kopfteils 2 am Flansch 44 des Antriebsteils 3 an. Bei miteinander verschraubtem Kopfteil 2 und Antriebsteil 3 ist die Antriebswelle des Elektromotors, vorliegend die Rotorwelle 57 des Elektromotors 56 in eine als Sackloch ausgebildete Aufnahme 46 der Welle 11 eingesteckt. Eine Drehmomentübertragung zwischen der Rotorwelle 57 und der Welle 11 des Zwischengetriebes 8 wird durch eine in die Aufnahme 46 eingesetzte Passfeder 47 bewirkt. Die die Einheit aus Kopfteil 2 und Antriebsteil 3 bildende Schwenkvorrichtung 1 wird im Bereich des Kopfteils gelagert. Hierzu weist das Gehäuse 6, konkret die Gehäusehälften 8 und 9, vertiefte Anschlussbereich 48 auf, im Bereich derer das Kopfteil 2 mit dem anderen Gegenstand verbunden, insbesondere verschraubt werden kann. Bei diesem anderen Gegenstand handelt es sich insbesondere um einen Roboterarm.

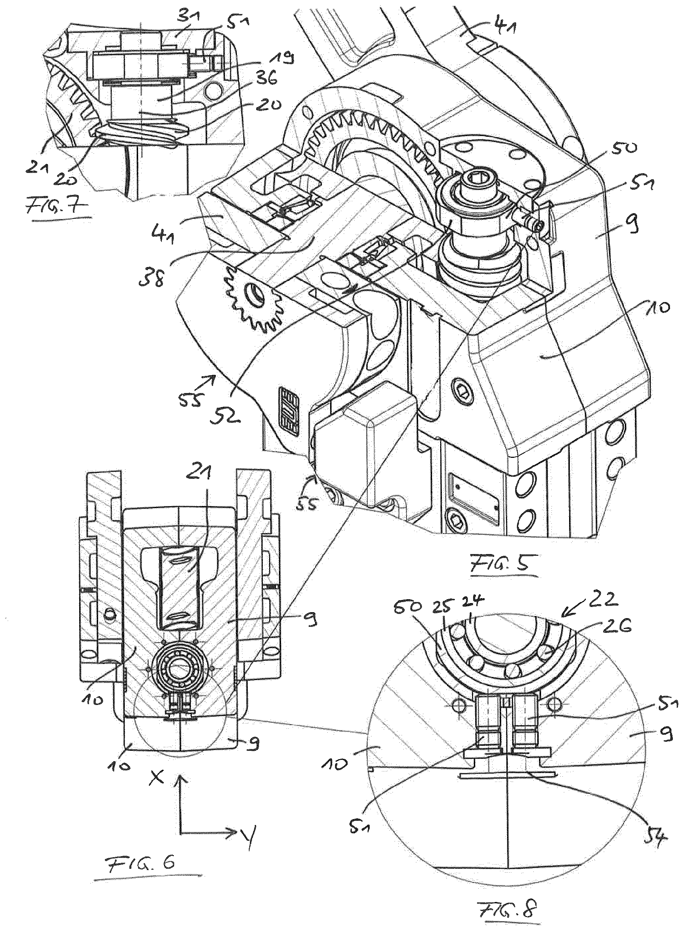

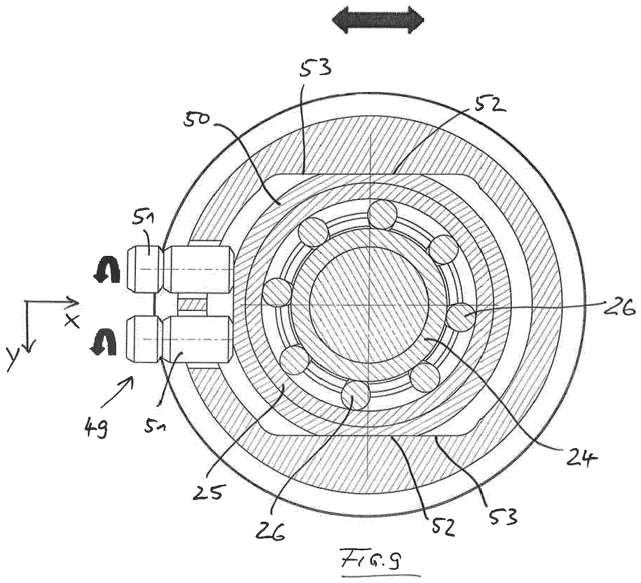

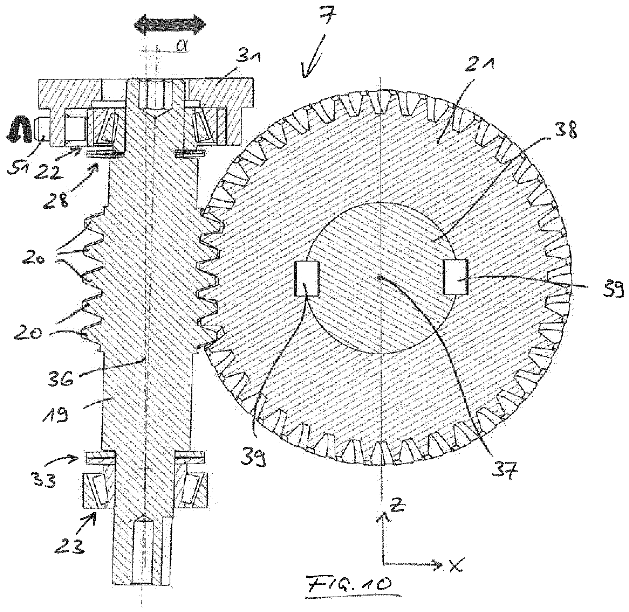

Wie insbesondere der Darstellung der Fig. 5 bis 10 zu entnehmen ist, ist die Welle 19 des Schneckengetriebes 7, bezogen auf die Drehachse 36 der Welle 19, in einer Ebene, die senkrecht zur Drehachse 37 des Rades 21 angeordnet ist, verstellbar, mit einer Verstellkomponente der Welle 19 senkrecht zu deren Drehachse 36. Die Welle 19 lässt sich somit in der X-Z-Ebene verstellen, mit einer Verstellkomponente der Welle 19 senkrecht zu deren Drehachse 36. Dies bedeutet, dass, wie insbesondere der Darstellung der Fig. 10 zu entnehmen ist, die Welle 19 in eine Position geringfügig gekippt werden kann, in der sie aus der Z-Achse um einen Winkel α ausgeschwenkt ist. Dies führt zu einer Verringerung des Spiels im Schneckengetriebe 7, weil die kämmenden Schraubengänge 20 tiefer zwischen die Zähne des Rades 21 eintauchen. Andererseits lässt sich das Spiel vergrößern, wenn die Welle 19 in der entgegengesetzten Richtung verschwenkt wird.

Die beschriebene Verstellung der Welle 19 erfolgt durch eine Stellvorrichtung 49. Mittels der Stellvorrichtung 49 ist eine Lageraufnahme 50 des Wälzlagers 22 geführt im Gehäuse 6, konkret den beiden Gehäusehälften 9, 10, verstellbar. Die Stellvorrichtung 49 weist zwei in das Gehäuse 6 eingeschraubte Stellschrauben 51 auf. Wegen des geteilten Gehäuses 6 ist in die jeweilige Gehäusehälfte 9 bzw. 10 eine Stellschraube 51 eingeschraubt, wobei die Stellschrauben 51 symmetrisch zur Teilungsebene der beiden Gehäusehälften 9, 10 angeordnet sind. Mittels der beiden Stellschrauben 51 ist die Lageraufnahme 50 verstellbar. Die das Wälzlager 22 aufnehmende Lageraufnahme 50 ist mittels der Stellschrauben 51 definiert in X-Richtung verschieblich, weil die Lageraufnahme 50 zwei parallele, in X-Z-Ebenen angeordnete Führungen 52 aufweist, die mit in entsprechenden Ebenen verlaufenden Gegenführungen 53 der beiden Gehäusehälften 9, 10 zusammenwirken. Durch gleichmäßiges Zustellen der vorzugsweise selbsthemmenden Stellschrauben 21 kann somit das Schneckengetriebe 7 auf ein optimales Spiel zwischen Schnecke und Schneckenrad eingestellt werden. Hierbei haben die Stellschrauben 51, als Maßnahme gegen unbefugte Eingriffe, einen Sonderkopf. Die beiden Stellschrauben 51 werden mittels einer Platine 54 gegen unbefugte Eingriffe gesichert.

Die Kegelrollenlager ermöglichen eine Nachgiebigkeit der Lagerstellen bei Auslenkung der Welle 19 um den Winkel α zur Einstellung des optimalen Spiels im Schneckengetriebe 7. Hierbei stellen die beiden Tellerfederpakete 28 und 33 sicher, dass die Vorspannung in den Wälzlagern 22, 23 aufrechterhalten wird. Diese Tellerfederpakete in ihrer Eigenschaft als elastische Elemente stellen sicher, dass die Schraubengänge 20 an den korrespondierenden Zähnen des Rades 21 anliegen. Diese elastischen Elemente/Tellerfedern dienen auch als Dämpfer während möglicher Schläge oder plötzlicher Bremsungen des von der Schwenkvorrichtung aufgenommenen Werkzeugs. Die Federkraft der Tellerfederpakete ist unter dem Aspekt der Beladung der Schwenkvorrichtung 1 zu ermitteln, somit insbesondere des Gewichts des von der Schwenkvorrichtung 1 im Bereich der Aufnahmeplatte 42 aufgenommenen Werkzeugs. Insbesondere ist die Kraft des oberen Tellerfederpakets 28 geringer als die Kraft des unteren Tellerfederpakets 33. Das obere Tellerfederpaket 28 ermöglicht die Vorspannung der Lager während das untere Tellerfederpaket 33 gedrückt wird.

Eine Ausführung mit einem Schrittmotor als Elektromotor enthält insbesondere einen selbst angetriebenen Mehrbereichsencoder 55. Deshalb ist keine Versorgung und keine Pufferbatterie erforderlich. Durch Drehrichtungsumkehr des Elektromotors lassen sich die Schwenkelemente 41 vor und zurück schwenken bei Untersetzung der Drehzahl des Elektromotors durch das Zwischengetriebe 8 und das Schneckengetriebe 7.

### Bezugszeichenliste

- 1: Schwenkvorrichtung
- 2: Kopfteil
- 3: Antriebsteil
- 4: Gehäuse
- 5: Einheit
- 6: Gehäuse
- 7: Schneckengetriebe
- 8: Zwischengetriebe
- 9: Gehäusehälfte
- 10: Gehäusehälfte
- 11: Welle
- 12: Wälzlager
- 13: Stirnrad-Zahnabschnitt
- 14: Stirnrad
- 15: Zwischenwelle
- 16: Wälzlager
- 17: Stirnrad
- 18: Stirnrad
- 19: Welle
- 20: Schraubengang
- 21: Rad
- 22: Wälzlager
- 23: Wälzlager
- 24: Innenring
- 25: Außenring
- 26: Kegelrolle
- 27: Rücksprung
- 28: Tellerfederpaket
- 29: Tellerfeder
- 30: Tellerfeder
- 31: Deckel
- 32: Rücksprung
- 33: Tellerfederpaket
- 34: Tellerfeder
- 35: Tellerfeder
- 36: Drehachse
- 37: Drehachse
- 38: Ausgangswelle
- 39: Passfeder
- 40: Keilwelle
- 41: Schwenkelement
- 42: Aufnahmeplatte
- 43: Schraube
- 44: Flansch
- 45: Flansch
- 46: Aufnahme
- 47: Passfeder
- 48: Anschlussbereich
- 49: Stellvorrichtung
- 50: Lageraufnahme
- 51: Stellschraube
- 52: Führung
- 53: Gegenführung
- 54: Platine
- 55: Mehrbereichsencoder
- 56: Elektromotor
- 57: Rotorwelle
- 58: elektrische Windung
- 59: Bremse
- 60: Encoder
- 61: Anschluss
- 62: Anschluss

## Patentansprüche

1. Schwenkvorrichtung (1) mit einem Kopfteil (2) und einem Antriebsteil (3), wobei das Antriebsteil (3) einen Elektromotor (56) aufweist und das Kopfteil (2) ein mittels des Elektromotors (56) antreibbares Schneckengetriebe (7) aufweist, wobei das Schneckengetriebe (7) eine antriebsseitige Welle (19) mit mindestens einem Schraubengang (20) und ein darin kämmendes, schrägverzahntes Rad (21) aufweist, wobei mittels des Rades (21) eine aus dem Kopfteil (2) herausgeführte Ausgangswelle (38) antreibbar ist und die Ausgangswelle (38) drehfest mit mindestens einem Schwenkelement (41) verbunden ist, wobei die Welle (19) beidseitig deren mindestens einen Schraubengang (20) mittels Wälzlagern (22, 23) in einem Gehäuse (4) des Kopfteils (2) gelagert ist, **dadurch gekennzeichnet, dass** die Welle (19), bezogen auf deren Drehachse (36), in einer Ebene (X, Z), die senkrecht zur Drehachse (37) des Rades (21) angeordnet ist, verstellbar ist, mit einer Verstellkomponente der Welle (19) senkrecht zu deren Drehachse (36).

2. Schwenkvorrichtung nach Anspruch 1, **dadurch gekennzeichnet, dass** der Elektromotor (56) als Schrittmotor oder als Brushless-Motor ausgebildet ist.

3. Schwenkvorrichtung nach Anspruch 1 oder 2, **dadurch gekennzeichnet, dass** die Welle (19) des Schneckengetriebes (7) mittels des Elektromotors (56) in einer Drehrichtung und in einer zu dieser Drehrichtung entgegengesetzten Drehrichtung antreibbar ist.

4. Schwenkvorrichtung nach einem der Ansprüche 1 bis 3, **dadurch gekennzeichnet, dass** eine Antriebswelle (57) des Elektromotors (56) über ein Zwischengetriebe (8), insbesondere ein Stirnradgetriebe, mit der Welle (19) des Schneckengetriebes (7) verbunden ist.

5. Schwenkvorrichtung nach einem der Ansprüche 1 bis 4, **dadurch gekennzeichnet, dass** das Rad (21) drehfest mit der Ausgangswelle (38) verbunden ist.

6. Schwenkvorrichtung nach einem der Ansprüche 1 bis 5, **dadurch gekennzeichnet, dass** die Welle (19) mittels einer Stellvorrichtung (49) verstellbar ist.

7. Schwenkvorrichtung nach Anspruch 6, **dadurch gekennzeichnet, dass** mittels der Stellvorrichtung (49) eine Lageraufnahme (50) eines Wälzlagers (22) der Wälzlager (22, 23) verstellbar ist, insbesondere die Lageraufnahme (50) geführt im Gehäuse (6) verstellbar ist.

8. Schwenkvorrichtung nach Anspruch 7, **dadurch gekennzeichnet, dass** die Stellvorrichtung (49) mindestens eine in das Gehäuse (6) eingeschraubte Stellschraube (51) aufweist, wobei mittels der Stellschraube (51) die Lageraufnahme (50) verstellbar ist.

9. Schwenkvorrichtung nach einem der Ansprüche 6 bis 8, **dadurch gekennzeichnet, dass** mittels der Stellvorrichtung (49) die Lageraufnahme (50) desjenigen Wälzlagers (22), das die Welle (19) dem Elektromotor oder dem Zwischengetriebe (8) abgewandt lagert, verstellbar ist.

10. Schwenkvorrichtung nach einem der Ansprüche 6 bis 9, **dadurch gekennzeichnet, dass** mindestens das der Stellvorrichtung (49) zugeordnete Wälzlager (22) als Kegelrollenlager ausgebildet ist, insbesondere alle Wälzlager (22, 23) als Kegelrollenlager ausgebildet sind.

11. Schwenkvorrichtung nach einem der Ansprüche 1 bis 10, **dadurch gekennzeichnet, dass** mindestens eines der Wälzlager (22 bzw. 23), insbesondere alle Wälzlager (22, 23) sich über mindestens ein elastisches Element (29, 30, 34, 35), vorzugsweise eine Tellerfeder (29, 30, 34, 35), insbesondere mehrere Tellerfedern (29, 30, 34, 35) axial abstützt.

12. Schwenkvorrichtung nach Anspruch 11, **dadurch gekennzeichnet, dass** sich das jeweilige Wälzlager (22 bzw. 23) über zwei gegensinnig angeordnete Tellerfedern (29, 30 bzw. 34, 35) abstützt.

13. Schwenkvorrichtung nach Anspruch 11 oder 12, **dadurch gekennzeichnet, dass** ein der Aufnahme der Welle (19) dienender Innenring (24) mindestens eines der Wälzlager (22 bzw. 23) sich über die mindestens eine Tellerfeder (29, 30, 34, 35) vorzugsweise die mehreren Tellerfedern (29, 30, 34, 35) axial abstützt.

14. Schwenkvorrichtung nach Anspruch 13, **dadurch gekennzeichnet, dass** sich der Innenring (24) über zwei gegensinnig angeordnete Tellerfedern (29, 30 bzw. 34, 35) abstützt, wobei die Tellerfedern (29, 30 bzw. 34, 35) sich in ihrem radial inneren Bereich nicht kontaktieren.

15. Schwenkvorrichtung nach einem der Ansprüche 1 bis 14, **dadurch gekennzeichnet, dass** das jeweilige Wälzlager (22 bzw. 23) sich einerseits zwischen der Welle (19) und andererseits zwischen dem Gehäuse (4) oder einem mit dem Gehäuse (4) verbundenen Teil, insbesondere Deckel (31), abstützt.
